# EUROPÄISCHE PATENTSCHRIFT

(11) **EP 3 318 385 B1**
(45) Veröffentlichungstag und Bekanntmachung des Hinweises auf die Patenterteilung: **25.08.2021**
(21) Anmeldenummer: 17197895.0
(22) Anmeldetag: 24.10.2017
(51) Int. Cl.: B29C 45/17, F16B 2/24, F16L 3/04, H02G 3/04

(54) **VERWENDUNG EINER VORRICHTUNG UND VERFAHREN ZUM FESTLEGEN VON LEITUNGEN IN KANÄLEN VON WERKZEUGEN**
USE OF A DEVICE AND METHOD FOR SETTING LINES IN CHANNELS OF TOOLS
UTILISATION D'UN DISPOSITIF ET PROCÉDÉ DE FIXATION DES CONDUITS DANS LES CANAUX D'OUTILS

(30) Priorität: 08.11.2016 DE 102016121302
(43) Veröffentlichungstag der Anmeldung: 09.05.2018
(73) Patentinhaber: Ziegler, Sven, 73095 Albershausen (DE)
(72) Erfinder: Ziegler, Sven, 73095 Albershausen (DE)
(74) Vertreter: Witte, Weller & Partner Patentanwälte mbB

(56) Entgegenhaltungen:
- EP-A1- 0 653 369
- EP-A1- 0 758 065
- EP-A2- 0 937 929
- BE-A- 417 893
- CH-A- 244 671
- DE-A1-102012 002 429
- DE-U1- 20 004 349
- GB-A- 1 207 741
- GB-A- 2 344 119

## Beschreibung

Die Erfindung betrifft eine Verwendung einer Vorrichtung zur Festlegung von Leitungen in Kanälen von Werkzeugen, mit mindestens einem Klemmelement zur Befestigung mindestens einer Leitung in einem Kanal, der sich von einer Oberfläche eines Werkzeugs aus erstreckt, wobei das Klemmelement gegenüber einer lichten Weite des Kanals mit Übermaß ausgebildet ist und zur Festlegung im Kanal unter Wirkung der Federspannung verwendet wird.

Die Erfindung betrifft ferner ein Verfahren zum Festlegen von Leitungen in Kanälen von Werkzeugen, mit den folgenden Schritten:
- Herstellen eines Kanals, der sich von einer Oberfläche des Werkzeugs aus erstreckt;
- Verlegen mindestens einer Leitung durch den Kanal; und
- Einführen eines Klemmelementes in den Kanal zum Sichern der Leitung.

Eine Verwendung und ein Verfahren zum Festlegen von Leitungen in Kanälen sind aus der EP 0 758 065 A1 bekannt. Hierbei wird ein Klemmelement, das beiderseits mit zackenförmigen Vorsprüngen versehen ist, in einen Kanal von außen eingesetzt, so dass sich die zackenförmigen Vorsprünge an den Innenwänden des Kanals verkeilen, um so eine Festlegung im Kanal zu gewährleisten.

Aus der DE 10 2012 002 429 A1 ist zur Abdeckung und Befestigung von Leitungen, die in einem Kanal verlegt sind, bekannt, mindestens ein Klemmelement vorzusehen, das in den Kanal einlegbar ist, und das durch eine Drehbewegung elastisch so verformbar ist, dass es mit seinen Anlageflächen in längs der Ausnehmung beidseitig angeordneten Aussparungen kraftschlüssig zum Verschließen der Ausnehmung befestigt und wieder lösbar zum Öffnen der Ausnehmung gehalten ist.

Durch die Verwendung derartiger Klemmelemente lassen sich in den Kanälen verlegte Leitungen auf einfache Weise sichern. Das bevorzugte Anwendungsgebiet der Erfindung ist die Festlegung von Leitungen, Kabeln und/oder Schläuchen, in Spritzgießwerkzeugen, Druckgusswerkzeugen, Strangpresswerkzeugen, Vakuumformwerkzeugen, Schnitt-, Biege- oder Vorrichtungswerkzeugen, Stanzwerkzeugen und Verbundwerkzeugen. Werden in solchen Werkzeugen denen Kabel oder Schläuche für elektrische, elektronische, hydraulische oder pneumatische Leitungsführungen verlegt, so müssen diese festgelegt und gesichert werden.

Bei der oben erwähnten Vorrichtung ist die Herstellung der betreffenden Klemmelemente aufwändig und für längere Kanäle ist eine Vielzahl von Klemmelementen notwendig, was einen erheblichen Montageaufwand bedeutet. Außerdem haben die Klemmelemente den Nachteil, dass die darunterliegenden Leitungen nicht unmittelbar sichtbar sind.

Aus der CH 244671 A ist ferner ein dehnbares Band mit alternierenden U-förmigen Biegungen bekannt, das zur Befestigung von Teilen verwendet wird.

Aus der GB 1 207 741 A ist eine Vorrichtung zum Befestigen von Kabeln oder Rohren bekannt, bei der eine federnde Klammer mit einem zentralen gekrümmten Bereich vorgesehen ist, und mit hakenförmigen Endbereichen an beiden Seiten, von denen jeweils ein Teil nach vorn und ein teil nach hinten hervorsteht, so dass damit jeweils ein Festklemmen auf einem Teil von außen ermöglicht ist.

Aus der GB 2 344 119 A ist eine Klammer zur Festlegung an einem schwalbenschwanzförmigen Kanal bekannt, wobei ein zig-zag-förmiges Federteil in dem Kanal festgeklemmt werden kann.

Aus der EP 0 653 369 A1 ist eine Verankerungsvorrichtung zum Festlegen eines Endstücks eines Kabels bekannt, wobei eine Klammer aus einem Federdrahtstahl verwendet wird, die mit zwei Endpunkten jeweils in Laschen an einer Oberfläche festgelegt wird.

Vor diesem Hintergrund liegt der Erfindung die Aufgabe zugrunde, eine Möglichkeit für eine sichere Festlegung von Leitungen in Kanälen anzugeben und dass andererseits eine kostengünstige Herstellung und Montage gewährleistet ist. Ferner soll ein geeignetes Verfahren zur Festlegung von solchen Leitungen, Kabeln und/oder Schläuchen in Kanälen von Werkzeugen angegeben werden.

Diese Aufgabe wird durch eine Verwendung gemäß Anspruch 1 gelöst.

Die Aufgabe der Erfindung wird auf diese Weise vollkommen gelöst.

Die erfindungsgemäß verwendeten Klemmelemente lassen sich sehr einfach und kostengünstig herstellen und montieren. Da das Klemmelement als Federdraht ausgebildet ist, wird die Sicht auf die dahinter angeordneten Leitungen kaum behindert, so dass diese jederzeit optisch kontrolliert werden können. Die Herstellung und Montage gestaltet sich besonders einfach. Da die Leitungen kaum abgedeckt sind, ergibt sich auch eine verbesserte Möglichkeit zur Abfuhr von Wärme, sofern eine Beheizung erfolgt. Die Klemmelemente können einfach durch Wirkung ihrer Federspannung in den Kanälen gehalten sein. Die Folge von Biegungen umfasst vorzugsweise mindestens zwei Biegungen, die sich zur ersten virtuellen Seitenkante hin erstrecken, und mindestens zwei Biegungen, die sich zur gegenüberliegenden Seitenkante hin erstrecken. Bevorzugt umfasst die Folge von Biegungen jedoch eine erheblich größere Anzahl von Biegungen, beispielsweise zehn oder mehr Biegungen. Da erfindungsgemäß die Klemmelemente gegenüber einer lichten Weite des Kanals mit Übermaß verwendet werden, ist in jedem Fall eine sichere und einfache Festlegung gewährleistet. Da das Klemmelement in dem Kanal auf wenigstens einer Längsseite in eine Längsnut eingreift, die sich vorzugsweise parallel zur Oberfläche mit einem gewissen Abstand dazu ausgehend von einer Innenwand des Kanals erstreckt, wird eine besonders sichere Festlegung des Klemmelementes gewährleistet.

Bevorzugt wird durch ein Übermaß von mindestens 0,05 mm sichergestellt, dass sich auch keine Längsverschiebung des Klemmelementes innerhalb des Kanals ergeben kann. Andererseits lässt sich das Klemmelement so elastisch verbiegen, dass ein Einsetzen in den Kanal und eine Sicherung innerhalb des Kanals gewährleistet sind.

Das verwendete Übermaß und die Toleranz hängen in gewissem Maße von der lichten Weite des Kanals ab, d.h. je größer die lichte Weite des Kanals, umso größer ist auch das Übermaß. Z.B. hat sich bei einer lichten Weite des Kanals von 24 mm ein Übermaß von 0,05 mm mit einer Toleranz von bis zu +0,1 mm als besonders geeignet erwiesen. Verwendet man einen Kanal mit einer größeren lichten Weite von z.B. 45 mm, so kann ein entsprechend größeres Übermaß verwendet werden. Entsprechendes gilt bei der Verwendung von Kanälen mit geringerer lichter Weite.

Gemäß einer weiteren Ausgestaltung der Erfindung weist der Kanal auf beiden Längsseiten jeweils einen Absatz mit einer Auflagefläche für das Klemmelement auf, die sich vorzugsweise parallel zur Oberfläche des Werkzeugkörpers erstreckt.

Auf diese Weise lässt sich das Klemmelement unter der Wirkung seiner Federspannung einfach in dem Kanal sichern.

Gemäß einer weiteren Ausgestaltung der Erfindung erstreckt sich die Längsnut zumindest abschnittsweise auf beiden Seiten des Kanals.

Indem die Längsnut zumindest auf einer Seite durchgehend ist und auf der gegen¬überliegenden Seite zumindest abschnittsweise, bevorzugt im Anfangs- und im Endbereich des Kanals, vorgesehen ist, ist eine sichere Festlegung des Klemmelementes in jedem Falle gewährleistet.

Das Klemmelement ist vorzugsweise zweidimensional gebogen.

Auf diese Weise sind eine einfache Herstellung und Montage gewährleistet.

Die Biegungen können gemäß einer ersten Ausführung des Klemmelementes als Krümmungen ausgebildet sein.

Bevorzugt sind die Biegungen jeweils um 180° gekrümmt und mit den jeweils gegenüber liegenden Biegungen durch gerade Abschnitte verbunden.

Dies ermöglicht ein besonders einfaches Einschieben des Klemmelementes in einen Kanal.

In alternativer Ausgestaltung der Erfindung können die Biegungen auch um mehr als 180° gekrümmt sein.

Ferner können aufeinanderfolgende Biegungen jeweils entgegengesetzt gekrümmt sein und vorzugsweise unmittelbar ineinander übergehen.

Auch können die Biegungen als Krümmungen mit weniger als 180° ausgebildet sein.

Darüber hinaus können die Biegungen auch trapezförmig, rechteckförmig, dreieckförmig oder in anderer Weise ausgestaltet sein.

Auf die genaue Form und Ausgestaltung der Biegungen kommt es nicht an.

Gemäß einer weiteren Ausgestaltung der Erfindung weist jede Auflagefläche eine Breite von 0,15 bis 0,4 mm, vorzugsweise 0,2 mm bis 0,3 mm, besonders bevorzugt von etwa 0,25 mm auf.

Damit ist eine sichere Auflage des Klemmelementes gewährleistet.

Die lichte Weite des Kanals oberhalb der Längsnuten ist vorzugsweise etwas größer als die lichte Weite gemessen zwischen den Innenwänden im Bereich der Auflageflächen, um so eine leichtere Einführung des Klemmelementes in die Nuten von oben zu ermöglichen.

Beispielsweise kann die lichte Weite des Kanals im Bereich oberhalb der Längsnuten etwa im Bereich von etwa der Hälfte der Breite einer jeden Auflagefläche bis zu etwa zwei Dritteln der Auflagefläche auf jeder Seite verkleinert sein. D.H. die lichte Weite im Bereich der Auflageflächen ist insgesamt um etwa die Breite einer Auflagefläche oder etwa zwei Drittel der Breite einer Auflagefläche größer als im Bereich oberhalb der Längsnuten.

Die Aufgabe der Erfindung wird ferner durch ein Verfahren gemäß Anspruch 13 gelöst.

Auch auf diese Weise wird die Aufgabe der Erfindung vollkommen gelöst.

Durch die Verwendung eines solchermaßen dimensionierten Klemmelementes in Verbindung mit einer Längsnut, die sich auf wenigstens einer Längsseite des Kanals erstreckt, ist dabei eine sichere Klemmbefestigung unter Wirkung der Eigenspannung des Klemmelementes gewährleistet. Ferner ist das Klemmelement zusätzlich gegen ein Herausrutschen gesichert.

In einer weiteren Ausgestaltung der Erfindung wird der Kanal mit einem Absatz mit einer Auflagefläche für das Klemmelement hergestellt, die sich vorzugsweise parallel zur Oberfläche des Werkzeugkörpers erstreckt.

Auf diese Weise ist eine sichere Aufnahme des Klemmelementes innerhalb des Kanals gewährleistet.

Der Kanal kann mit unterschiedlichen lichten Weiten gefertigt werden, beispielsweise mit 5 mm bis 50 mm lichter Weite, gemessen von Innenwand zu Innenwand des Kanals.

Es versteht sich, dass die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der Erfindung zu verlassen.

Weitere Merkmal und Vorteile der Erfindung ergeben sich aus nachfolgenden Beschreibung bevorzugter Ausführungsbeispiele unter Bezugnahme auf die Zeichnungen. Es zeigen:
- Fig. 1: eine perspektivische Teildarstellung eines beispielhaften Werkzeugs mit einem Kanal an einer Oberfläche zur Führung von Leitungen, wobei die Leitungen mit einem erfindungsgemäßen Klemmelement gesichert sind;
- Fig. 2: eine Darstellung einer ersten Ausführung eines erfindungsgemäßen Klemmelementes in einer Aufsicht;
- Figuren 4, 5, 6, 7, 8: Ansichten von verschiedenen Varianten des Klemmelementes gemäß Fig. 2;
- Fig. 9: einen vergrößerten Teil-Querschnitt durch einen Kanal mit der zugehöri-gen Bemaßung für ein erfindungsgemäßes Klemmelement;
- Fig. 10: eine nicht zur beanspruchten Erfindung gehörende Abwandlung des Kanals gemäß Fig. 9 ohne Längsnuten und
- Fig. 11: eine Abwandlung des Kanals gemäß Fig. 1 bzw. 3, der als Y-förmiger Kanal ausgebildet ist.

Dabei werden für entsprechende Teile in unterschiedlichen Figuren entsprechende Bezugsziffern verwendet.

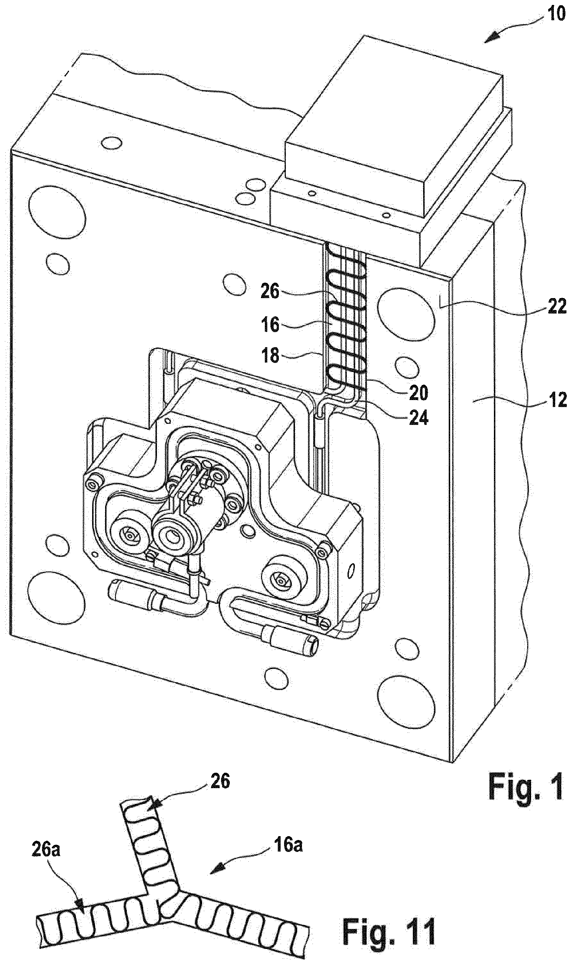

In Fig. 1 ist ein beispielhaftes Werkzeug teilweise dargestellt, das als Spitzgusswerkzeug ausgebildet ist. Das insgesamt mit 10 bezeichnete Werkzeug weist einen Werkzeugkörper 12 auf.

Im Werkzeugkörper 12 ist ausgehend von einer Oberfläche 22 des Werkzeugkörpers 12 ein Kanal 16 gebildet. Der Kanal 16 erstreckt sich von der Oberfläche 22 aus in die Tiefe des Werkzeugkörpers 12 hinein. Innerhalb des Kanals 16 verlaufen mehrere Leitungen, die beispielhaft mit 24 bezeichnet sind. Der Kanal 16 weist zwei Seitenwände 18, 20 auf, zwischen denen ein Klemmelement 26 in Form eines gebogenen Federdrahtes verläuft und in nicht näher dargestellter Weise in Längsnuten auf beiden Seiten gehalten ist. Das Klemmelement 26 ist unter Vorspannung zwischen den beiderseitigen Längsnuten gehalten und sichert die darunter verlaufenden Leitungen 24.

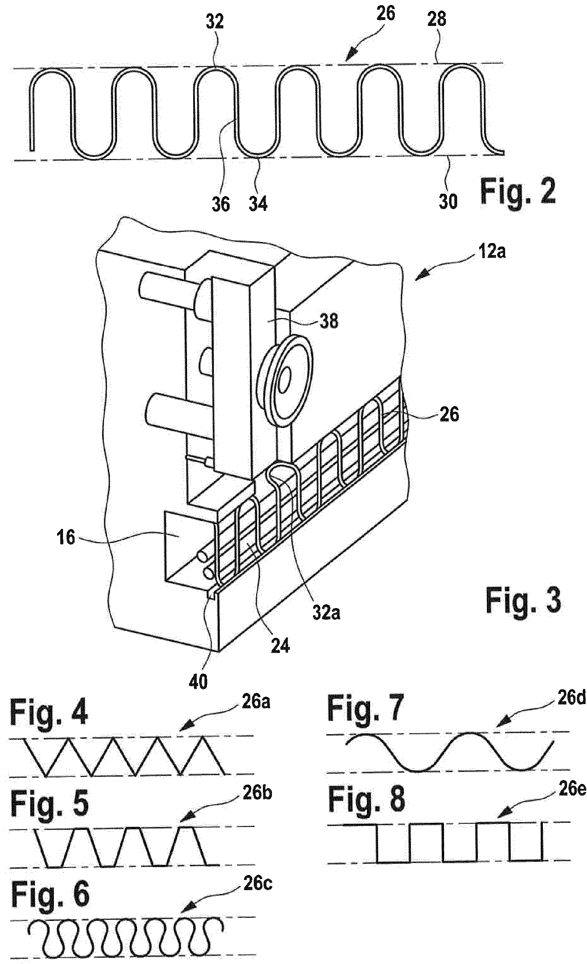

In Fig. 2 ist eine mögliche Ausführung des Klemmelementes 26 vergrößert in der Ansicht dargestellt. In der hier dargestellten Form ist das Klemmelement 26 zweidimensional gebogen. Es ist durch zwei virtuelle Seitenkanten 28, 30 definiert, die parallel zueinander verlaufen und zwischen denen sich eine Folge von Biegungen 32, 34 abwechselnd hin und her erstreckt, wobei die Biegungen jeweils an ihren äußeren Enden entlang der virtuellen Seitenkanten 28, 30 verlaufen.

Die Biegungen 32, 34 sind jeweils als Krümmungen von 180° ausgebildet. Benachbarte Biegungen 32, 34 sind durch gerade Abschnitte 36 miteinander verbunden. Diese zweidimensional gebogene Ausführungsform ist eine mögliche Ausführungsform des Klemmelementes 26.

Es versteht sich, dass zahlreiche andere Formen von zweidimensional gebogenen Klemmelementen für den gleichen Zweck verwendet werden können. Beispielhaft sind in den Figuren 4, 5, 6, 7, 8 verschiedene Varianten des Klemmelementes dargestellt, die mit 26a, 26b, 26c, 26d, 26e bezeichnet sind.

Gemäß Fig. 4 sind die Biegungen dreieckförmig ausgebildet.

Gemäß Fig. 5 sind die Biegungen trapezförmig ausgebildet.

Gemäß Fig. 6 sind die Biegungen als Krümmungen mit mehr als 180° ausgebildet, wobei benachbarte Krümmungen entgegengesetzt sind und unmittelbar ineinander übergehen.

Gemäß Fig. 7 sind die Biegungen mit Krümmungen von weniger als 180° ausgebildet und verlaufen annähernd sinusförmig.

Gemäß Fig. 8 ist das Klemmelement 26e mit rechteckförmigen Biegungen versehen.

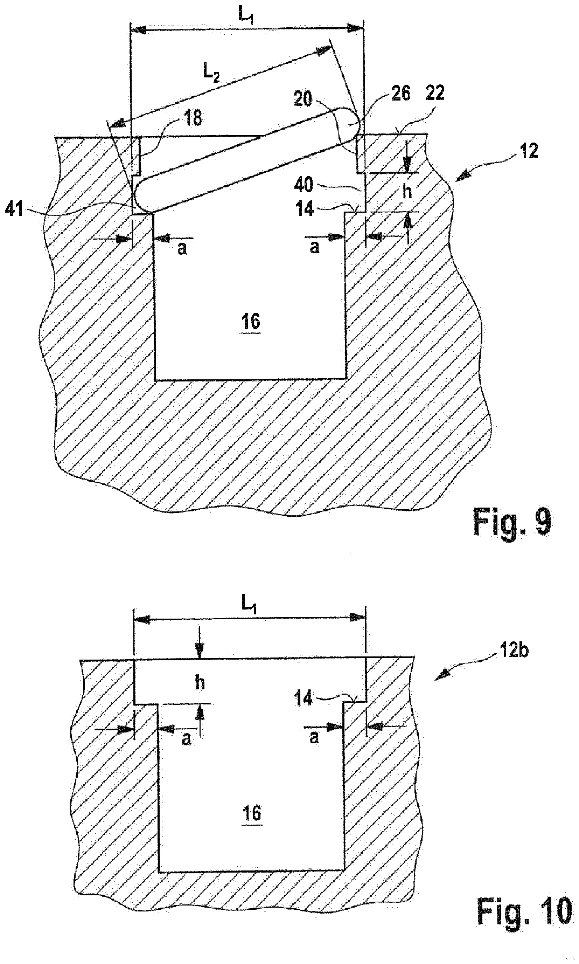

Fig. 9 zeigt einen vergrößerten Teil-Querschnitt aus dem Werkzeugkörper 12 gemäß Fig. 1 (nicht maßstabsgerecht).

Gemäß Fig. 9 ist der von einer Oberfläche 22 des Werkzeugkörpers 12 ausgehende Kanal 16 mit einem rechteckförmigen Querschnitt ausgeführt. Es versteht sich, dass natürlich auch andere Kanalquerschnitte denkbar sind.

Zur Auflage des Klemmelementes 26 ist in dem Kanal 16 an beiden Seitenwänden 18, 20 jeweils ein Absatz mit einer Auflagefläche 14 gebildet, die sich parallel zur Oberfläche 22 erstreckt. Die Auflagefläche 14 weist jeweils eine Breite a von beispielsweise 0,25 mm auf. Oberhalb der Auflagefläche 14 erstreckt sich auf jeder Seite eine Längsnut 40, 41. Die Höhe h der Längsnuten 40, 41 beträgt beispielhaft 1,1 mm mit einer Toleranz von + 0,1 mm.

Die lichte Weite L1 des Kanals 16 gemessen zwischen beiden Innenwänden 18, 20 im Bereich der Auflagenflächen 14 beträgt im vorliegenden Fall beispielsweise 24,5 mm.

Die Breite des Klemmelementes bzw. Federdrahtes 26 L2, die gemäß Fig. 2 zwischen den beiden virtuellen Linien 28, 30 gemessen ist, entspricht der lichten Weite L1 des Kanals 16 zuzüglich eines Übermaßes von 0,05 mm. Die Breite L2 des Klemmelementes 26 beträgt somit 24,55 mm. Die Fertigung erfolgt vorzugsweise mit einer Toleranz von + 0,1 mm.

Mit einem gewissen Abstand von der Oberfläche 22 von z.B. 1 mm verläuft zusätzlich auf jeder Innenoberfläche 18, 20 des Kanals 16 jeweils die Längsnut 40, 41. Der Abstand zwischen den Innenwänden 18, 20 oberhalb der Längsnuten 40, 41 ist etwas größer als die lichte Weite des Kanals L1 abzüglich der Breite der beiden Auflageflächen 14, also etwas größer als 24 mm, z.B. 24,3 mm. Durch diese Abmessungen ist gewährleistet, dass das Klemmelement 26 leicht von oben in die Längsnuten 40, 41 eingeführt werden kann und immer mit einer gewissen Vorspannung zwischen den beiden Längsnuten 40, 41 gehalten ist.

Zum Einsetzen in den Kanal 16 wird das Klemmelement 26 entsprechend elastisch verbogen, bis es mit seinen Biegungen 32, 34 auf beiden Längsseiten in die beiden Längsnuten 40, 41 eingreift. Ist das Klemmelement 26 einmal eingesetzt, so sind hierdurch darunter verlaufende Leitungen sicher gehalten. Infolge des Übermaßes kann sich das Klemmelement 26 auch nicht in Längsrichtung verschieben.

Soweit dies gewünscht ist, ist es denkbar, zusätzlich Klemmelemente der aus der DE 10 2012 002 429 A1 bekannten Art am Anfang und am Ende mit in den Kanal einzusetzen.

Fig. 3 zeigt eine leicht abgewandelte Ausführung eines Werkzeugkörpers 12a in perspektivischer Darstellung mit einem Klemmelement 26 zur Sicherung von Leitungen 24, die in einem Kanal 16 verlaufen. Hier ist beispielhaft mit 38 ein beheiztes Element bezeichnet, das gegenüber dem Kanal 16 in das Werkzeug hinein versetzt angeordnet ist.

Es ist möglich, die Biegungen in dem betreffenden Bereich aus der zweidimensionalen ursprünglichen Ausführung des Klemmelementes hinaus seitlich in Richtung auf das beheizte Element 38 hin plastisch zu verbiegen, so dass sich an dieser Stelle eine dreidimensionale Biegung 32a ergibt. Hierdurch kann ein gewisser Abstand zu dem beheizten Element 38 sicher eingehalten werden.

Fig. 10 zeigt ein Werkzeug 12b mit einem leicht abgewandelten Kanal 16. Da hier auf die beiden Längsnuten 40, 41 verzichtet wurde, gehört diese Ausführungsform nicht zur beanspruchten Erfindung. Das Klemmelement 26 in Form des Federdrahtes kann somit unmittelbar von oben in dem Kanal 16 eingesetzt werden, bis es auf den Auflageflächen 14 aufliegt und unter der Wirkung seiner Federspannung gehalten ist.

Fig. 11 zeigt eine Abwandlung eines Kanals, der insgesamt mit Ziff. 16a bezeichnet ist und schematisch in der Aufsicht dargestellt ist. Der Kanal 16a verläuft Y-förmig. Zur Sicherung von in dem Kanal 16a verlaufenden Leitungen kann ein erstes Klemmelement 26 verwendet werden, das sich durchgehend durch einen Teil des Y-förmigen Kanals erstreckt, während für den anderen Teil des Kanals 16a ein zweites Klemmelement 26' verwendet wird.

Darüber hinaus können natürlich auch Kanäle verwendet werden, die einen gekrümmten Verlauf haben oder die mehrere Abschnitte mit unterschiedlichen lichten Weiten haben. Die zugeordneten Klemmelemente können in entsprechender Weise angepasst werden.

## Patentansprüche

1. Verwendung einer Vorrichtung zur Festlegung von Leitungen in Kanälen (16, 16a) von Werkzeugen (10), mit mindestens einem Klemmelement (26, 26a, b, c, d, e) zur Befestigung mindestens einer Leitung (24) in einem Kanal (16, 16a), der sich ausgehend von einer Oberfläche (22) eines Werkzeugkörpers (12, 12a) erstreckt, wobei das Klemmelement (26, 26a-e) gegenüber einer lichten Weite (L₁) des Kanals (16, 16a) mit Übermaß ausgebildet ist und zur Festlegung im Kanal (16, 16a) unter Wirkung der Federspannung verwendet wird, **dadurch gekennzeichnet, dass** das Klemmelement (26, 26a-e) als Federdraht ausgebildet ist, der derart gebogen ist, dass eine virtuelle erste Seitenkante (28) und eine dazu parallele, virtuelle zweite Seitenkante (30) gebildet sind, zwischen denen sich eine Folge von Biegungen (32, 34) abwechselnd hin und her erstreckt, wobei die beiden zueinander parallelen, virtuellen Seitenkanten (28, 30) jeweils durch die Biegungen (32, 34) definiert sind, und dass das Klemmelement (26, 26a-e) zum Eingreifen in eine Längsnut (40, 41) auf wenigstens einer Längsseite (18, 20) des Kanals (16, 16a) verwendet wird.

2. Verwendung nach Anspruch 1, **dadurch gekennzeichnet, dass** der Kanal (16, 16a) auf beiden Längsseiten jeweils einen Absatz mit einer Auflagefläche (14) für das Klemmelement (26, 26a-e) aufweist, die sich vorzugsweise parallel zur Oberfläche (22) des Werkzeugkörpers (12, 12a) erstreckt.

3. Verwendung nach Anspruch 1 oder 2, **dadurch gekennzeichnet, dass** sich die Längsnut (40, 41) zumindest abschnittsweise auf beiden Seiten des Kanals (16, 16a) erstreckt.

4. Verwendung nach einem der vorhergehenden Ansprüche, **dadurch gekennzeichnet, dass** das Klemmelement (26, 26a-e) zweidimensional gebogen ist.

5. Verwendung nach Anspruch 4, **dadurch gekennzeichnet, dass** die Biegungen als Krümmungen (32, 36) ausgebildet sind.

6. Verwendung nach Anspruch 5, **dadurch gekennzeichnet, dass** die Biegungen jeweils um 180° gekrümmt sind und mit den jeweils gegenüber liegenden Biegungen durch gerade Abschnitte (36) verbunden sind.

7. Verwendung nach Anspruch 5, **dadurch gekennzeichnet, dass** die Biegungen jeweils um mehr als 180° gekrümmt sind.

8. Verwendung nach Anspruch 7, **dadurch gekennzeichnet, dass** aufeinanderfolgende Biegungen jeweils entgegengesetzt gekrümmt sind und vorzugsweise unmittelbar ineinander übergehen.

9. Verwendung nach Anspruch 5, **dadurch gekennzeichnet, dass** die Biegungen als Krümmungen mit weniger als 180° ausgebildet sind.

10. Verwendung nach einem der Ansprüche 1 bis 4, **dadurch gekennzeichnet, dass** die Biegungen trapezförmig, rechteckförmig oder dreieckförmig ausgebildet sind.

11. Verwendung nach einem der Ansprüche 2 bis 10, **dadurch gekennzeichnet, dass** eine Breite (a) der Auflagefläche (14) 0,15 bis 0,4 mm, vorzugsweise 0,2 mm bis 0,3 mm, besonders bevorzugt von 0,25 mm beträgt.

12. Verwendung nach einem der vorhergehenden Ansprüche, **dadurch gekennzeichnet, dass** das Klemmelement (26, 26a-e) gegenüber einer lichten Weite (L₁) des Kanals im Bereich der Auflagefläche ein Übermaß von 0,05 mm mit einer Toleranz von 0,0 bis 0,3 mm, vorzugsweise von 0,05 bis 0,25 mm, besonders bevorzugt von 0,1 bis 0,2 mm aufweist.

13. Verfahren zum Festlegen von Leitungen in Kanälen von Werkzeugen (10), mit den folgenden Schritten:
- Herstellen eines Kanals (16, 16a), der sich ausgehend von einer Oberfläche (40) eines Werkzeugkörpers (12, 12a) erstreckt und an mindestens einer Längsseite (18, 20) eine Längsnut (40, 41) aufweist;
- Verlegen mindestens einer Leitung (24) durch den Kanal (16, 16a);
- Einführen eines Klemmelementes (26, 26a-e) in den Kanal (16, 16a), das als Federdraht ausgebildet ist, der derart gebogen ist, dass eine virtuelle erste Seitenkante (28) und eine dazu parallele, virtuelle zweite Seitenkante (30) gebildet sind, zwischen denen sich eine Folge von Biegungen (32, 34) abwechselnd hin und her erstreckt, wobei die beiden zueinander parallelen, virtuellen Seitenkanten (28, 30) jeweils durch Extrempunkte der Biegungen (32, 34) definiert sind; und
- Sichern des Klemmelementes (26, 26a-e) in dem Kanal (16, 16a), wobei das Klemmelement (26, 26a-e) im Kanal (16, 16a) durch Wirkung seiner Federspannung und durch Eingreifen in die Längsnut (40, 41) gehalten wird.

14. Verfahren nach Anspruch 13, bei dem der Kanal (16, 16a) mit einem Absatz mit einer Auflagefläche (14) für das Klemmelement (26, 26a-e) hergestellt wird, die sich vorzugsweise parallel zur Oberfläche (22) des Werkzeugkörpers (12, 12a) erstreckt.

15. Verfahren nach Anspruch 13 oder 14, bei dem der Kanal (16, 16a) auf beiden Längsseiten (18, 20) mit einer Längsnut (40, 41) hergestellt wird.

## Claims

1. Use of a device for fixing lines in channels (16, 16a) of tools (10), comprising at least one clamping element (26, 26a, b, c, d, e) for fixing at least one line (24) in a channel (16, 16a) which extends from a surface (22) of a tool body (12, 12a), the clamping element (26, 26a-e) being oversized with respect to a clear width (L₁) of the channel (16, 16a) and being used for fixing in the channel (16, 16a) under the effect of the spring tension, **characterized in that** the clamping element (26, 26a-e) is formed as a spring wire which is bent in such a way that a virtual first side edge (28) and a virtual second side edge (30) parallel thereto are formed, between which a sequence of bends (32, 34) extends alternately back and forth, wherein the two mutually parallel virtual side edges (28, 30) are respectively defined by the bends (32, 34), and that the clamping element (26, 26a-e) is used for engaging in a longitudinal groove (40, 41) on at least one longitudinal side (18, 20) of the channel (16, 16a).

2. Use according to claim 1, **characterized in that** the channel (16, 16a) has on each of the two longitudinal sides a shoulder with a bearing surface (14) for the clamping element (26, 26a-e), which preferably extends parallel to the surface (22) of the tool body (12, 12a).

3. Use according to claim 1 or 2, **characterized in that** the longitudinal groove (40, 41) extends at least in sections on both sides of the channel (16, 16a).

4. Use according to any of the preceding claims, **characterized in that** the clamping element (26, 26a-e) is bent two-dimensionally.

5. Use according to claim 4, **characterized in that** the bends are formed as curvatures (32, 36).

6. Use according to claim 5, **characterized in that** the bends are each curved by 180° and are connected to the respective opposite bends by straight sections (36).

7. Use according to claim 5, **characterized in that** the bends are each curved by more than 180°.

8. Use according to claim 7, **characterized in that** successive bends are each curved in opposite directions and preferably merge directly into one another.

9. Use according to claim 5, **characterized in that** the bends are formed as curvatures with less than 180°.

10. Use according to any of claims 1 to 4, **characterized in that** the bends are trapezoidal, rectangular or triangular.

11. Use according to any of claims 2 to 10, **characterized in that** a width (a) of the bearing surface (14) is 0.15 to 0.4 mm, preferably 0.2 mm to 0.3 mm, particularly preferred is 0.25 mm.

12. Use according to any of the preceding claims, **characterized in that** the clamping element (26, 26a-e) has an oversize of 0.05 mm with a tolerance of 0.0 to 0.3 mm, preferably of 0.05 to 0.25 mm, particularly preferred of 0.1 to 0.2 mm, relative to a clear width (L₁) of the channel in the region of the bearing surface.

13. Method for fixing lines in channels of tools (10), comprising the following steps:
- Producing a channel (16, 16a) extending from a surface (40) of a tool body (12, 12a) and having a longitudinal groove (40, 41) on at least one longitudinal side (18, 20);
- Routing at least one conduit (24) through the channel (16, 16a);
- Inserting into the channel (16, 16a) a clamping element (26, 26a-e) which is formed as a spring wire which is bent in such a way that a virtual first side edge (28) and a virtual second side edge (30) parallel thereto are formed, between which a sequence of bends (32, 34) extends alternately back and forth, the two mutually parallel virtual side edges (28, 30) each being defined by extreme points of the bends (32, 34); and
- securing the clamping member (26, 26a-e) in the channel (16, 16a), the clamping member (26, 26a-e) being held in the channel (16, 16a) by action of its spring tension and by engagement with the longitudinal groove (40, 41).

14. Method according to claim 13, wherein the channel (16, 16a) is made with a shoulder having a bearing surface (14) for the clamping element (26, 26a-e), which preferably extends parallel to the surface (22) of the tool body (12, 12a).

15. Method according to claim 13 or 14, wherein the channel (16, 16a) is manufactured with a longitudinal groove (40, 41) on both longitudinal sides (18, 20).

## Revendications

1. Utilisation d'un dispositif pour la fixation de conduits dans des canaux (16, 16a) d'outils (10), comprenant au moins un élément de blocage (26, 26a, b, c, d, e) pour la fixation d'au moins un conduit (24) dans un canal (16, 16a), qui s'étend à partir d'une surface (22) d'un corps d'outil (12, 12a), l'élément de blocage (26, 26a-e) étant configuré avec une surmesure par rapport à une largeur interne (L₁) du canal (16, 16a) et étant utilisé pour la fixation dans le canal (16, 16a) sous l'effet de la tension de ressort, **caractérisée en ce que** l'élément de blocage (26, 26a-e) est configuré sous la forme d'un fil à ressort qui est fléchi de telle sorte qu'un premier bord latéral virtuel (28) et un deuxième bord latéral virtuel (30), parallèle à celui-ci, soient formés, entre lesquels une succession de flexions (32, 34) s'étend en alternance en avant et en arrière, les deux bords latéraux virtuels (28, 30) parallèles l'un à l'autre étant chacun définis par les flexions (32, 34), et **en ce que** l'élément de blocage (26, 26a-e) est utilisé pour la pénétration dans une rainure longitudinale (40, 41) sur au moins un côté longitudinal (18, 20) du canal (16, 16a).

2. Utilisation selon la revendication 1, **caractérisée en ce que** le canal (16, 16a) comprend sur les deux côtés longitudinaux à chaque fois un gradin muni d'une surface d'appui (14) pour l'élément de blocage (26, 26a-e), qui s'étend de préférence parallèlement à la surface (22) du corps d'outil (12, 12a).

3. Utilisation selon la revendication 1 ou 2, **caractérisée en ce que** la rainure longitudinale (40, 41) s'étend au moins en sections sur les deux côtés du canal (16, 16a).

4. Utilisation selon l'une quelconque des revendications précédentes, **caractérisée en ce que** l'élément de blocage (26, 26a-e) est fléchi bidimensionnellement.

5. Utilisation selon la revendication 4, **caractérisée en ce que** les flexions sont configurées sous la forme de courbures (32, 36).

6. Utilisation selon la revendication 5, **caractérisée en ce que** les flexions sont chacune courbées de 180° et sont reliées avec les flexions opposées respectives par des sections droites (36).

7. Utilisation selon la revendication 5, **caractérisée en ce que** les flexions sont chacune courbées de plus de 180°.

8. Utilisation selon la revendication 7, **caractérisée en ce que** des flexions successives sont à chaque fois courbées en direction opposée et se raccordent de préférence directement les unes aux autres.

9. Utilisation selon la revendication 5, **caractérisée en ce que** les flexions sont configurées sous la forme de courbures de moins de 180°.

10. Utilisation selon l'une quelconque des revendications 1 à 4, **caractérisée en ce que** les flexions sont configurées sous forme trapézoïdale, sous forme rectangulaire ou sous forme triangulaire.

11. Utilisation selon l'une quelconque des revendications 2 à 10, **caractérisée en ce qu'**une largeur (a) de la surface d'appui (14) est de 0,15 à 0,4 mm, de préférence de 0,2 mm à 0,3 mm, de manière particulièrement préférée de 0,25 mm.

12. Utilisation selon l'une quelconque des revendications précédentes, **caractérisée en ce que** l'élément de blocage (26, 26a-e) présente, par rapport à une largeur interne (L₁) du canal dans la zone de la surface d'appui, une surmesure de 0,05 mm avec une tolérance de 0,0 à 0,3 mm, de préférence de 0,05 à 0,25 mm, de manière particulièrement préférée de 0,1 à 0,2 mm.

13. Procédé de fixation de conduits dans des canaux d'outils (10), comprenant les étapes suivantes :
- la fabrication d'un canal (16, 16a), qui s'étend à partir d'une surface (40) d'un corps d'outil (12, 12a) et comprend une rainure longitudinale (40, 41) sur au moins un côté longitudinal (18, 20) ;
- l'installation d'au moins un conduit (24) à travers le canal (16, 16a) ;
- l'insertion d'un élément de blocage (26, 26a-e) dans le canal (16, 16a), qui est configuré sous la forme d'un fil à ressort, qui est fléchi de telle sorte qu'un premier bord latéral virtuel (28) et un deuxième bord latéral virtuel (30), parallèle à celui-ci, soient formés, entre lesquels une succession de flexions (32, 34) s'étend en alternance en avant et en arrière, les deux bords latéraux virtuels (28, 30) parallèles l'un à l'autre étant chacun définis par des points extrêmes des flexions (32, 34) ; et
- la sécurisation de l'élément de blocage (26, 26a-e) dans le canal (16, 16a), l'élément de blocage (26, 26a-e) étant maintenu dans le canal (16, 16a) par l'effet de sa tension de ressort et par pénétration dans la rainure longitudinale (40, 41).

14. Procédé selon la revendication 13, dans lequel le canal (16, 16a) est fabriqué avec un gradin muni d'une surface d'appui (14) pour l'élément de blocage (26, 26a-e), qui s'étend de préférence parallèlement à la surface (22) du corps d'outil (12, 12a).

15. Procédé selon la revendication 13 ou 14, dans lequel le canal (16, 16a) est fabriqué avec une rainure longitudinale (40, 41) sur les deux côtés longitudinaux (18, 20).
